# EUROPÄISCHE PATENTSCHRIFT

(11) **EP 1 927 175 B1**
(45) Veröffentlichungstag und Bekanntmachung des Hinweises auf die Patenterteilung: **02.11.2016**
(21) Anmeldenummer: 06708507.6
(22) Anmeldetag: 24.02.2006
(51) Int. Cl.: H02J 3/04, H02J 3/36, H02J 1/10

(54) **VORRICHTUNG ZUR REDUNDANTEN ENERGIEVERSORGUNG WENIGSTENS EINER LAST**
DEVICE FOR REDUNDANTLY SUPPLYING POWER TO AT LEAST ONE LOAD
DISPOSITIF POUR ALIMENTER AU MOINS UNE CHARGE EN ÉNERGIE DE MANIÈRE REDONDANTE

(30) Priorität: 23.09.2005 DE 102005047686
(43) Veröffentlichungstag der Anmeldung: 04.06.2008
(73) Patentinhaber: Siemens Aktiengesellschaft, 80333 München (DE); Transocean Offshore Deepwater Drilling Inc., Houston, TX 77252-2765 (US)
(72) Erfinder: BOURGEAU, Ed, Houston, TX 77252-2765 (US); FLOTTEMESCH, Jörg, 91088 Bubenreuth (DE); MOSER, Jürgen, 91301 Forchheim (DE)
(74) Vertreter: Maier, Daniel Oliver
(86) Internationale Anmeldenummer: PCT/EP2006/060264
(87) Internationale Veröffentlichungsnummer: WO 2007/033841

(56) Entgegenhaltungen:
- US-A- 5 612 581
- US-A1- 2004 036 359
- US-B1- 6 449 173
- US-B1- 6 465 909

## Beschreibung

Die Erfindung betrifft eine Vorrichtung zur redundanten Energieversorgung wenigstens einer Last mit einem abschaltbare Leistungshalbleiter aufweisenden ersten Stromrichter, der über einen ersten Anschluss mit einem ersten Wechselspannungsnetz verbindbar ist, einem abschaltbare Leistungshalbleiter aufweisenden zweiten Stromrichter, der über einen zweiten Anschluss mit einem zweiten Wechselspannungsnetz verbindbar ist, und einem Gleichspannungszwischenkreis, der den ersten Stromrichter gleichspannungsseitig mit dem zweiten Stromrichter verbindet, so dass eine beliebige Leistungsübertragung zwischen den Wechselspannungsnetzen ermöglicht ist.

Eine solche Vorrichtung ist bereits aus der DE 103 40 625 A1 bekannt. Die dort gezeigte Vorrichtung weist einen ersten Pulsstromrichter sowie einen zweiten Pulsstromrichter auf, wobei die Pulsstromrichter über einen Gleichspannungszwischenkreis miteinander verbunden sind. Jeder Pulsstromrichter besteht aus einer so genannten 6-Puls-Brückenschaltung mit abschaltbaren Leistungshalbleitern. Solche auch Kurzkupplung genannten Vorrichtungen dienen im Bereich der Energieverteilung zur Kopplung von Energieverteilungsübertragungsnetzen, wobei die Energieverteilungsnetze unterschiedliche Frequenzen, Spannungsebenen, Sternpunktbehandlung oder Phasenlagen aufweisen können.

Vorrichtungen zur redundanten Energieversorgung gelangen beispielsweise auf Bohrschiffen oder auf Bohrplattformen zum Einsatz. So sind Bohrschiffe und Bohrplattformen bekannt, die bei Bohrvorgängen in größeren Wassertiefen nicht verankert sind, sondern mittels so genannter Thruster dynamisch positioniert werden. Die Thruster sind als drehzahl- und azimutverstellbare Antriebe ausgelegt, so dass eine genaue Positionierung der Bohrschiffe oder Bohrplattformen ohne Verankerung ermöglicht ist. Ein Ausfall der Energieversorgung von mehr als 45 Sekunden kann zu hohen Kosten führen, da in einem solchen Falle das zum Durchführen der Bohrung notwendige Bohrgestänge mechanisch entkoppelt und nach erneuter Positionierung des Bohrschiffes oder der Bohrplattform wieder zusammengekoppelt werden müsste. Zum Antrieb solcher Motoren oder Antriebe ist daher eine sichere Energieversorgung erforderlich. Aus diesem Grunde sind Bohrschiffe und/oder Bohrplattformen üblicherweise mit einem redundanten Energieversorgungsnetz ausgerüstet. Zusätzlich zu diesen beiden Energieversorgungsnetzen ist üblicherweise ein Notnetz vorhanden, auf das im Fehlerfall umgestellt werden kann. Jedes Energieversorgungsnetz wird über eigene Generatoren mit Energie gespeist. Zur Kupplung der Energieversorgungsnetze dient beispielsweise ein mechanischer Schalter. Dieser Kopplung haftet jedoch der Nachteil an, dass das fehlerbehaftete Energieversorgungsnetz das fehlerfreie Energieversorgungsnetz nachteilig beeinflussen kann. Diese Beeinflussung ist jedoch unerwünscht. Ferner ist bekannt, anstelle eines Schalters einen drehzahlveränderbaren Antrieb über Umschalter auf beide Energieversorgungsnetze zu schalten. Eine solche Zuschaltung eines Antriebs ist jedoch zeitbehaftet, so dass es in der Übergangsphase der Umschaltung zu Fehlpositionierungen kommen kann.

Die US 2004/0036359 A1 offenbart eine Vorrichtung zur ausfallsicheren Energieversorgung eines Rechners. Daher ist die Vorrichtung für den Niederspannungsbereich ausgelegt. Der besagte Rechner ist mit zwei Wechselspannungsquellen verbunden, wobei die beiden Wechselspannungsquellen über vier Energieversorgungseinheiten mit dem Rechner verbunden sind. Mit Hilfe von Relaisschaltungen ist es möglich, die Energieversorgungseinheiten mit der einen oder der anderen Wechselspannungsquelle zu koppeln.

Die US 6,449,173 B1 offenbart eine Verteilervorrichtung im Bereich der Kommunikationstechnik. Auch hier sind zwei Wechselspannungsquellen vorgesehen, deren Wechselspannung mit Hilfe von zwei Gleichrichtern unter Gewinnung von Gleichspannung gleichgerichtet wird. Die Gleichspannung wird dann auf viele Gleichspannungspfade aufgeteilt, wobei die Gleichspannungspfade die Gleichrichter miteinander verbinden, so dass bei Ausfall einer Spannungsquelle die Versorgungsenergie auch von der jeweils anderen Spannungsquelle bereitgestellt werden kann.

Die US 6,465,909 B1 beschreibt ebenfalls eine so genannte redundante Energieversorgung für geringe Leistungen, wobei Feldeffekttransistoren zum Einsatz gelangen.

Die US 5,612,581 beschreibt zwei parallel zueinander angeordnete Umrichter, die gleichspannungsseitig mit einem Tiefsteller verbunden sind. Dabei transformiert der Tiefsteller seine eingangsseitige hohe Gleichspannung auf eine herabgesetzte niedrigere Gleichspannung.

Aufgabe der Erfindung ist es, eine Vorrichtung der eingangs genannten Art bereitzustellen, mit der eine kostengünstige und sichere Versorgung einer Last mit hoher Leistung ermöglicht ist.

Die Erfindung löst diese Aufgabe durch die Vorrichtung nach Anspruch 1 sowie das System nach Anspruch 16.

Erfindungsgemäß dient die beispielsweise unter dem Begriff Kurzkupplung bekannte Vorrichtung nicht mehr länger zur Kopplung zweiter Netze. Vielmehr wird durch das Vorsehen eines Lastanschlusses, der mit dem Gleichspannungszwischenkreis verbunden ist, die redundante Energieversorgung einer an den Lastanschluss anschließbaren Last ermöglicht. Eine solche Vorrichtung eignet sich daher insbesondere für eine Installation auf Bohrschiffen oder Bohrinseln, die mit drehzahl- und azimutverstellbaren Antrieben, wie beispielsweise den so genannten Thrustern, zur Positionierung der Bohrschiffe oder Bohrinseln in großen Wassertiefen ausgerüstet sind. So ist beispielsweise die Energieversorgung der an dem Gleichspannungszwischenkreis angeschlossenen Lasten aus dem zweiten Wechselspannungsnetz im Normalbetrieb möglich, wobei bei einem Zusammenbruch der Wechselspannung in dem besagten zweiten Wechselspannungsnetz die Versorgung der Lasten von dem ersten Wechselspannungsnetz übernommen wird. Die Stromrichter weisen erfindungsgemäß zweckmäßigerweise abschaltbare Leistungshalbleiter wie beispielsweise GTOs oder IGBTs auf. Die abschaltbaren Leistungshalbleiter werden beispielsweise im Kiloherzbereich durch eine Pulsweitenmodulation getaktet, so dass entsprechend kurze Übergangszeiten beim Umschalten vom zweiten auf das erste Wechselspannungsnetz ermöglicht sind. Bei solch kurzen Umschaltzeiten sind Fehlpositionierungen sicher vermieden.

Die Regelung der Stromrichter, die in diesem Fall auch als Umrichter bezeichnet werden können, ist im Rahmen der Erfindung grundsätzlich beliebig.

Gemäß einer zweckmäßigen Weiterentwicklung weist jedoch der erste Stromrichter eine erste Gleichspannungsregelung zur Regelung einer Gleichspannung eines Gleichspannungszwischenkreises auf. Der erste Umrichter dient dann zum Aufbau einer zweckmäßigen Gleichspannung im Gleichspannungszwischenkreis.

Gemäß einer zweckmäßigen Weiterentwicklung weist der zweite Stromrichter eine Leistungsregelung zur Regelung des Leistungsflusses über den zweiten Stromrichter auf, wobei die Leistungsregelung auf eine negative Sollgleichleistung erfolgt, deren Betrag dem Betrag der von allen Lasten aufgenommen Leistung entspricht. Gemäß dieser vorteilhaften Weiterentwicklung erfolgt die Energieversorgung deran dem Gleichspannungszwischenkreis angeschlossenen Lasten durch das zweite Wechselspannungsnetz, wobei die Leistungsregelung auf eine negative Sollgleichleistung erfolgt. Insbesondere bei dem Einsatz von Motoren als Last, deren aufgenommene Leistung sich über die Zeit hinweg fortwährend ändert, ist es daher zweckmäßig, Messsensoren zum Messen der lastseitig aufgenommenen Leistung einzusetzen. So sind beispielsweise dem Lastanschluss geeichte Spannungs- und Stromwandler vorgeschaltet, mit deren Ausgangssignalen die durch die Lasten aufgenommene Leistung messbar ist. Aus der gemessenen verbrauchten Leistung wird durch die Regelung die negative Sollgleichleistung gleichen Betrages bestimmt und als Sollwert bei der Leistungsregelung verwendet. Somit kommt es zur Versorgung der Lasten durch das zweite Versorgungsnetz. Der erste Stromrichter dient hingegen zur Aufrechterhaltung der Gleichspannung im Gleichspannungszwischenkreis sowie zur gleichzeitigen Steuerung der Blindleistung in dem ersten Wechselspannungsnetz. Bei einem Ausfall des zweiten Wechselspannungsnetzes regelt der erste Stromrichter die Gleichspannung des Gleichspannungszwischenkreises trotz der fehlenden Leistungsversorgung nahezu verzögerungsfrei nach, so dass es trotz des Zusammenbruches des zweiten Wechselspannungsnetzes zu keiner merklichen Unterbrechung der Energieversorgung der Lasten kommt. Ein Zusammenbruch des ersten Wechselspannungsnetzes hätte jedoch bei dieser Ausgestaltung der Erfindung den Zusammenbruch der Gleichspannung im Gleichspannungszwischenkreis im Gefolge, so dass ein weiterer Antrieb der Lasten ausgeschlossen wäre.

Aus diesem Grunde sieht eine Weiterentwicklung der Erfindung vor, dass der zweite Stromrichter eine zweite Spannungsregelung zur Regelung der Spannung im Gleichspannungszwischenkreis aufweist. Da gemäß dieser Weiterentwicklung beide Stromrichter die Gleichspannung des Gleichspannungszwischenkreises regeln, sind sämtliche Lasten gleichermaßen aus beiden Netzen versorgbar. Der Ausfall eines Netzes - und zwar egal welchen Netzes - hätte somit keinen nachhaltigen Einfluss auf den Antrieb, da das jeweils intakte Wechselspannungsnetz die Versorgung der Lasten übernimmt. Die Zeitdauer des Überganges der Energieversorgung von einem Wechselspannungsnetz zum anderen Wechselspannungsnetz liegt erfindungsgemäß im Bereich einiger Millisekunden. Eine gegenseitige Beeinflussung der Stromrichter durch Schwingungen im Gleichspannungszwischenkreis ist durch eine geeignete Auswahl der Regelparameter verhinderbar. Daher sind die Stromregler zweckmäßigerweise so ausgelegt, dass ein Überschwingen und eine gegenseitige Beeinflussung der Stromrichter verhindert ist. Solche Regelungen sind dem Fachmann bekannt.

Gemäß einer diesbezüglichen zweckmäßigen Weiterentwicklung weist der Gleichspannungszwischenkreis Gleichstromunterbrecher auf. Solche Gleichstromunterbrecher sind beispielsweise als eine übliche Sicherung, eine Sprengsicherung oder aber ein elektronischer Schalter realisiert. Der Gleichspannungszwischenkreis besteht vorteilhafterweise aus mehreren Gleichstromzweigen, wobei jeder Gleichstromzweig, der auch als Leistungsblock bezeichnet werden kann, einzeln überwacht und durch die Gleichstromunterbrecher geschützt wird. Ein Gleichstromunterbrecher ermöglicht dann eine selektive Unterbrechung des jeweils betroffenen Gleichstromzweiges im Fehlerfall, ohne dass der Betrieb der anderen Gleichstromzweige beeinträchtigt ist.

Vorteilhafterweise ist jeder Stromrichter aus in Reihe geschalteten Leistungsblöcken zusammengesetzt. Solche Leistungsblöcke werden gemäß dem Stand der Technik auch als Power Electronic Buildung Block bezeichnet und sind dem Fachmann als solche bekannt, so dass an dieser Stelle hierauf nicht näher eingegangen zu werden braucht. Die Leistungsblöcke ermöglichen einen modularen Aufbau der Stromrichter und auf diese Weise die Anpassung des Stromrichters an beliebige Spannungsebenen. Zweckmäßigerweise sind die Stromrichter und der Gleichspannungszwischenkreis für Mittelspannungen und zum Antrieb entsprechender Lasten ausgelegt, wobei der Mittelspannungsbereich zwischen 1 kV und 52 kV liegt.

Gemäß einer diesbezüglich zweckmäßigen Weiterentwicklung ist jeder Leistungsblock über eine Unterbrechereinheit mit dem Gleichspannungszwischenkreis verbunden. Auf diese Weise ist der Austausch eines Leistungsblockes ermöglicht, ohne die Verbindung der übrigen Leistungsblöcke mit dem Gleichspannungszwischenkreis zu unterbrechen, so dass die Wartung und die Instandhaltung der erfindungsgemäßen Vorrichtung vereinfacht sind.

Vorteilhafterweise ist jeder Lastanschluss über einen Wechselrichterantrieb mit dem Gleichspannungszwischenkreis verbunden. Durch den Einsatz eines Wechselrichterantriebes ist der Antrieb von Wechselstrommotoren ermöglicht, wobei die Antriebsfrequenz der Lasten beliebig einstellbar ist.

Gemäß einer bevorzugten Ausführungsform weist die erfindungsgemäße Vorrichtung einen ersten Parallelstromrichter, der über einen erste Anschlusszweig mit dem ersten Anschluss und dem ersten Stromrichter verbunden ist, und einen zweiten Parallelstromrichter auf der über einen zweiten Anschlußzweig mit dem zweiten Anschluss und dem zweiten Stromrichter verbunden ist, wobei der erste Parallelstromrichter und der zweite Parallelstromrichter über einen Parallelgleichspannungszwischenkreis miteinander verbunden sind. Mit anderen Worten sind gemäß dieser Weiterentwicklung zwei Kurzkupplungen parallel oder besser antiparallel zwischen das erste Wechselspannungsnetz und das zweite Wechselspannungsnetz anschließbar. Dabei kann die Parallelkurzkupplung für geringere Spannungen und daher kostengünstiger als die Hauptkurzkupplung ausgelegt sein. Bei der Parallelkurzschlusskupplung handelt es sich beispielsweise um eine Niederspannungskurzkupplung mit entsprechend ausgelegten Stromrichtern. Die Parallelstromrichter der Parallelkurzkupplung dienen grundsätzlich der Bereitstellung einer Wechselspannung für den ersten Stromrichter bei Ausfall des Wechselstromnetzes, so dass eine Energieversorgung auch dann bereitgestellt ist, wenn das erste Wechselspannungsnetz fehlerbedingt ausfällt. Im Normalbetrieb und bei Ausfall des zweiten Wechselspannungsnetzes arbeitet die Parallelkurzkupplung jedoch im Leerlauf. Wesentlich ist, dass bei einem Ausfall oder bei einem Fehler im ersten Wechselspannungsnetz, das fehlerbehaftete erste Wechselspannungsnetz gegenüber dem ersten Parallelstromrichter also gegenüber der Parallelkurzkupplung verriegelt ist. Die Verriegelung erfolgt beispielsweise durch einen Schalter, der zwischen dem ersten Wechselspannungsnetz und dem ersten Parallelstromrichter und dem ersten Stromrichter angeordnet ist. Durch den Schalter ist beispielsweise der erste Anschluss realisiert. Für den Normalbetrieb weist die Parallelkurzkupplung zweckmäßigerweise eine Statik auf, die geringer ist als die Statik der in das erste Wechselspannungsnetz einspeisenden Generatoren. Ansonsten würde die Parallelkurzkupplung gegen das erste Wechselspannungsnetz arbeiten, das im Normalbetrieb gegenüber dem ersten Stromrichter nicht verriegelt ist.

Vorteilhafterweise weist der zweite Parallelstromrichter eine Parallelgleichspannungsregelung zur Regelung der Gleichspannung des Parallelgleichspannungszwischenkreises auf. Gemäß einer diesbezüglich zweckmäßigen Weiterentwicklung weist der erste Parallelstromrichter eine Wechselspannungsregelung zur Regelung der Wechselspannung in dem ersten Anschlusszweig auf. Die Regelung der parallel zum ersten und zweiten Stromrichter angeordneten ersten beziehungsweise zweiten Parallelstromrichter ist genau umgekehrt zum ersten bzw. zweiten Stromrichter. Dies hängt selbstverständlich mit dem Zweck der Parallelkurzkupplung zusammen, die zur Bereitstellung einer geeigneten Wechselspannungsversorgung in dem ersten Anschlusszweig vorgesehen ist, wenn in dem verriegelten ersten Wechselspannungsnetz ein Fehler vorliegt.

Vorteilhafterweise sind der erste Anschluss und/oder der zweite Anschluss Unterbrechungseinheiten. Unterbrechungseinheiten sind beispielsweise als solche bekannte Schaltanlagen oder Schalter, die mit dem Wechselspannungsnetz verbindbar sind. Die Schalter können mechanische Schalter oder elektronische Schalter sein.

Zweckmäßigerweise sind der erste Stromrichter und/oder der erste Parallelstromrichter jeweils über einen ersten Transformator mit dem ersten Anschlusszweig und der zweite Stromrichter und/oder der zweite Parallelstromrichter jeweils über einen zweiten Transformator mit dem zweiten Anschlusszweig verbunden. Auf diese Weise ist eine galvanische Entkopplung zwischen der Vorrichtung und den Wechselspannungsnetzen während des Betriebs bereitgestellt. Selbstverständlich ist es im Rahmen der Erfindung auch möglich, dass an dem Parallelgleichspannungszwischenkreis Parallellastanschlüsse angeschlossen sind, die mit einer Last verbindbar sind.

Weitere Vorteile entstehen, wenn Wechselspannungsantriebe den Lastanschlüssen vorgeschaltet sind. Ein Anschluss von Lasten an dem Parallellastanschluss bietet sich schon deswegen an, da die Parallelkurzkupplung im Normalbetrieb quasi im Leerlauf arbeitet. Sind der erste Parallelstromrichter und der zweite Parallelstromrichter für geringere Spannungen ausgelegt, können auch für entsprechende Spannungen ausgelegte Lasten redundant mit Energie versorgt werden. Die Verwendungsmöglichkeiten der erfindungsgemäßen Vorrichtung vergrößern sich daher beträchtlich.

Die Erfindung betrifft ferner ein System mit einem ersten Wechselspannungsnetz und einem zweiten Wechselspannungsnetz, somit einer Vorrichtung gemäß einem der vorhergehenden Ansprüche.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: eine Kurzkupplung gemäß dem Stand der Technik zur Kopplung zweier Wechselspannungsnetze,
- Figur 2: ein Ausführungsbeispiel der erfindungsgemäßen Vorrichtung in einer schematischen Darstellung,
- Figur 3: ein weiteres Ausführungsbeispiel der erfindungsgemäßen Vorrichtung in einer schematischen Darstellung,
- Figur 4: ein weiteres Ausführungsbeispiel der erfindungsgemäßen Vorrichtung in einer schematischen Darstellung,
- Figur 5: ein weiteres Ausführungsbeispiel der erfindungsgemäßen Vorrichtung in einer schematischen Darstellung und
- Figur 6: ein weiteres Ausführungsbeispiel der erfindungsgemäßen Vorrichtung in einer schematischen Darstellung zeigen.

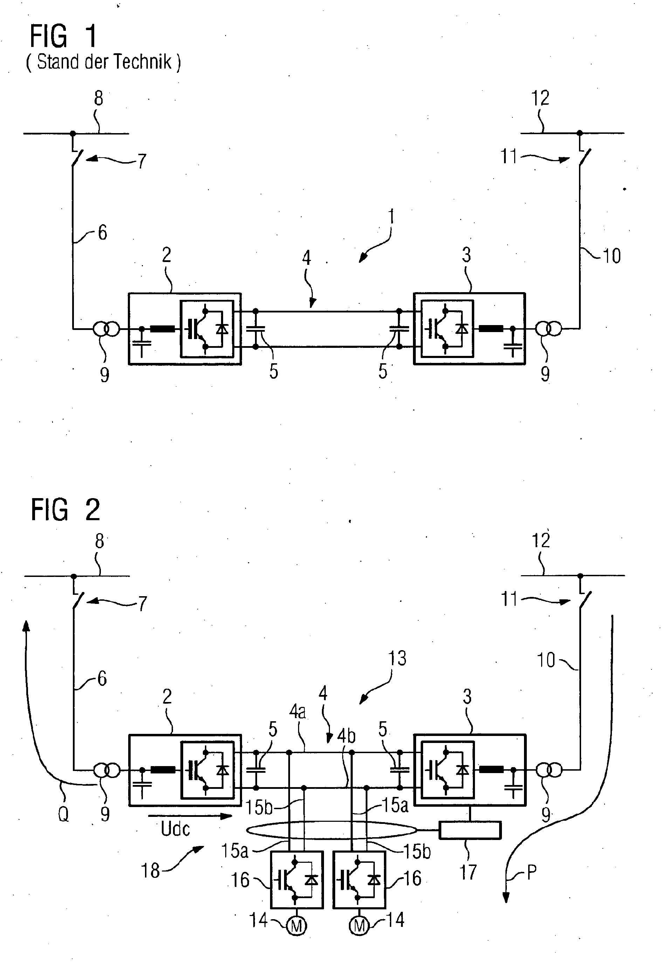

Figur 1 zeigt eine Kurzkupplung 1 als Vorrichtung gemäß dem Stand der Technik. Die vorbekannte Kurzkupplung 1 weist einen ersten Stromrichter 2 sowie einen zweiten Stromrichter 3 auf, die über einen Gleichspannungszwischenkreis 4 gleichspannungsseitig miteinander verbunden sind. Der Gleichspannungszwischenkreis 4 umfasst Energiespeicher, in diesem Falle Kondensatoren 5, zur Aufrechterhaltung der Gleichspannung. Der Aufbau der Stromrichter 2 und 3 ist dem Fachmann bestens bekannt, so dass an dieser Stelle hierauf nicht genauer eingegangen zu werden braucht. Sie bestehen im Wesentlichen aus einer 6-Puls-Brückenschaltung mit abschaltbaren Leistungshalbleitern, in diesem Fall IGBTs, wobei eine gegensinnig angeordnete Freilaufdiode jedem abschaltbaren Leistungshalbleiter parallel geschaltet ist. Der Stromrichter 2 ist wechselspannungsseitig über einen ersten Anschlusszweig 6 mit einem ersten Schalter 7 verbunden, der als Anschluss zum Anschließen eines ersten Wechselspannungsnetzes 8 dient. Zur induktiven Kopplung des ersten Stromrichters 2 mit dem ersten Wechselspannungsnetz 8 bei eingeschaltetem Schalter 7 ist ein Transformator 9 vorgesehen.

Der zweite Stromrichter 3 ist ebenfalls über einen Transformator 9 und einem zweiten Anschlusszweig 10 mit einem zweiten Schalter 11 als zweiten Anschluss verbunden. Durch Einschalten des Schalters 11 ist der zweite Stromrichter 3 daher mit einem zweiten Wechselspannungsnetz 12 induktiv koppelbar.

Durch eine zweckmäßige Regelung der Stromrichter 2 beziehungsweise 3 ist eine beliebige Leistungsübertragung von dem ersten Wechselspannungsnetz 8 zum zweiten Wechselspannungsnetz 12 oder von dem zweiten Wechselspannungsnetz 12 in das erste Wechselspannungsnetz 8 ermöglicht. In der schematischen Darstellung weisen der erste und der zweite Stromrichter 2, 3 nur schematisch angedeutete Kapazitäten und Induktanzen auf, deren Verschaltung und Wirkungsweise dem Fachmann ebenfalls bekannt ist.

Die Figur 2 zeigt ein Ausführungsbeispiel der erfindungsgemäßen Vorrichtung 13 in einer schematischen Darstellung. Die dargestellte Vorrichtung 13 weist ebenfalls einen ersten Stromrichter 2 sowie einen zweiten Stromrichter 3 auf, die mit einem Gleichspannungszwischenkreis 4 gleichspannungsseitig miteinander verbunden sind. Über einen ersten Anschlusszweig 6 sowie über einen ersten Schalter 7 ist der erste Stromrichter 2 mit einem ersten Wechselspannungsnetz 8 verbindbar, wohingegen der zweite Stromrichter 3 über einen zweiten Anschlusszweig 10 und einen zweiten Schalter 11 mit einem zweiten Wechselspannungsnetz 12 koppelbar ist. Die Wechselspannungsnetze 8 und 12 weisen jeweils eine eigene Energieversorgung, hier in Form eines Generators, auf und sind unter anderem zur Energieversorgung so genannter Thruster 14 vorgesehen, die zur Positionierung eines Bohrschiffes eingerichtet sind, wenn das Bohrschiff Bohrungen in tiefen Gewässern durchführt. Wie bereits erläutert wurde, sind Thruster drehzahl- und azimutveränderbare Motoren. Da auch nur ein kurzzeitiger Ausfall der Energieversorgung der Thruster hohe Kosten im Gefolge haben würde, ist neben dem zweiten Wechselspannungsnetz 12 das im Normalbetrieb die von den Thrustern 14 benötigte Leistung bereitstellt, ein erstes Wechselspannungsnetz 8 vorgesehen, auf das bedarfsweise umgestellt werden soll.

Hierzu ist der Gleichspannungszwischenkreis 4 mit zwei Lastanschlüssen verbunden. Die Verbindung zwischen Gleichspannungszwischenkreis und den Lastanschlüssen erfolgt mittels Lastanschlussleitungen 15a und 15b, die mit der positiven Verbindungsleitung 4a des Gleichspannungszwischenkreises 4 beziehungsweise mit der negativen Verbindungsleitung 4b des Gleichspannungszwischenkreises 4 galvanisch verbunden sind. Dem Lastanschluss sind zwei Antriebswechselrichter 16 vorgeschaltet, die zur Umwandlung der Gleichspannung in eine Wechselspannung eingerichtet sind. Auch die Antriebswechselrichter 16 sind als solche dem Fachmann bestens bekannt, so das an dieser Stelle hierauf nicht eingegangen zu werden braucht. Die Antriebswechselrichter 16 erzeugen eine Wechselspannung beziehungsweise einen Wechselstrom mit gewünschter Spannungsamplitude, Phasenlage und Frequenz.

Die Steuerung des ersten Stromrichters 2 erfolgt durch eine Gleichspannungsregelung, die eine als Sollwert der Regelung vorgegebene Sollgleichspannung im Gleichspannungszwischenkreis 4 einstellt. Die Gleichspannungsregelung ist in Figur 2 durch den Pfeil mit Udc versehenen schematisch angedeutet. Durch die Gleichspannungsregelung ist ferner eine Regelung der Blindleistung Q des ersten Wechselspannungsnetzes 8 ermöglicht. Dies ist in Figur 2 durch den mit Q bezeichneten Pfeil angedeutet.

Der zweite Stromrichter 3 weist hingegen eine Leistungsregelung 17 auf, die mit schematisch angedeuteten Messeinheiten 18 verbunden ist, wobei die Messeinheiten 18 Spannungswandler umfassen, die ein zu dem Gleichstrom und/oder dem Wechselstrom und der Gleichspannung und/oder Wechselspannung jeweils proportionales Ausgangssignal erzeugen, das unter Gewinnung von Abtastwerten durch eine Abtasteinheit abgetastet und mittels eines Analog-/Digitalwandlers in digitale Gleichstromwerte beziehungsweise Gleichspannungswerte umgewandelt wird. Die Gleichspannungsregelung verfügt ferner über eine parametrisierbare Sollgleichleistung, die der Gleichspannungsregelung als Sollwert dient, woraufhin die Leistungshalbleiter, in diesem Fall die IGBTs, des zweiten Stromrichters 3 so gezündet werden, dass die durch die Sollgleichleistung vorgegebene Leistung durch den zweiten Stromrichter 3 übertragen wird. Im Rahmen der Erfindung wird eine negative Sollgleichleistung vorgegeben, die vom Betrag her der Leistung entspricht, die von den Thrustern 14 aufgenommen wird. Mit anderen Worten wird aufgrund der negativen Sollgleichspannung ein Leistungsfluss in Richtung des mit P bezeichneten Pfeiles von dem zweiten Wechselspannungsnetz 12 zu den Thrustern 14 bereitgestellt. Das erste Wechselspannungsnetz 8 dient hingegen zum Aufrechterhalten der Gleichspannung Udc im Gleichspannungszwischenkreis 4.

Bei einem Ausfall des zweiten Wechselspannungsnetzes 12 übernimmt das erste Wechselspannungsnetz 8 ohne wesentliche zeitliche Verzögerung die Energieversorgung der Thruster 14. Dabei wird trotz des Ausfalles des zweiten Wechselspannungsnetzes 12 die Gleichspannung Udc im Gleichspannungszwischenkreis durch den ersten Stromrichter 2 aufrechterhalten. Eine Blindleistungssteuerung im ersten Wechselspannungsnetz 2 ist jedoch in diesem Fall nicht mehr möglich.

Liegt allerdings ein Fehler im ersten Wechselspannungsnetz 8 vor, ist das Aufrechterhalten der Gleichspannung im Gleichspannungszwischenkreis 4 nicht mehr möglich. Die Energieversorgung der Thruster 14 ist dann unterbrochen.

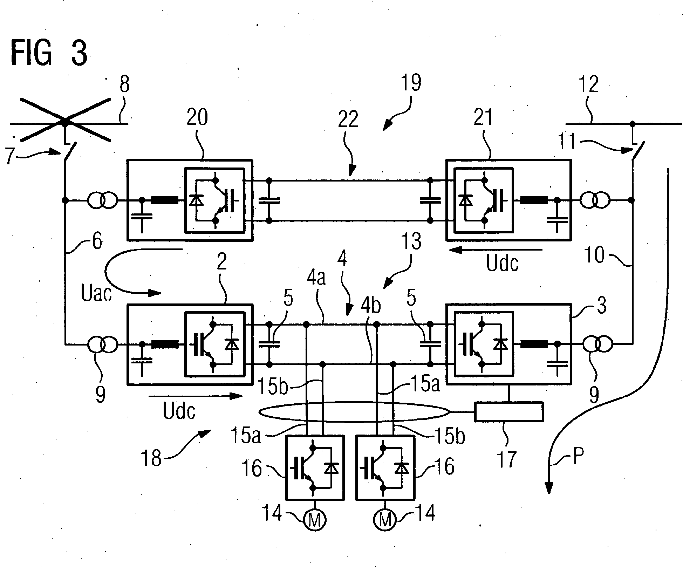

Figur 3 zeigt ein Ausführungsbeispiel, das auch bei einem Ausfall des ersten Wechselspannungsnetzes 8 die Energieversorgung der Thruster 14 sicherstellt. In dem gezeigten Ausführungsbeispiel der Erfindung ist der Kurzkupplung 13 eine Parallelkurzkupplung 19 gewissermaßen antiparallel geschaltet. Hierzu ist ein erster Parallelstromrichter 20 induktiv mittels eines Transformators 9 mit dem ersten Anschlusszweig 6 gekoppelt. Gleichspannungsseitig ist der erste Parallelstromrichter 20 mit einem zweiten Parallelstromrichter 21 über einen ebenfalls bipolaren Parallelgleichspannungszwischenkreis 22 verbunden. Der zweite Stromrichter 21 ist mittels des zweiten Transformators 9 mit dem zweiten Anschlusszweig 10 verbunden und weist eine Parallelgleichspannungsregelung zum Steuern der Gleichspannung des Parallelgleichstromzwischenkreises 22 auf, die in Figur 3 lediglich durch den mit UDC bezeichneten Pfeil angedeutet ist.

Der erste Parallelstromrichter 20 weist eine Wechselspannungsregelung auf, mit der eine in dem ersten Anschlusszweig 6 erzeugbare Wechselspannung steuerbar ist. Auf diese Weise erzeugt die Parallelkurzkupplung 19 eine Wechselspannung in dem Anschlusszweig 6, mit welcher der Betrieb des ersten Stromrichters 2 trotz Ausfall des ersten Wechselspannungsnetzes 8 ermöglicht bleibt. Zur Verriegelung des ersten Wechselspannungsnetzes 8 gegenüber dem ersten Anschlusszweig 6 dient der erste Schalter 7. Auf diese Weise ist eine Versorgung der Motoren oder Thruster 14 auch dann möglich, wenn ein Fehler im ersten Wechselspannungsnetz 8, wie in Figur 3 durch das Kreuz angedeutet, vorliegt. Wichtig ist jedoch, dass im Fehlerfall der Schalter 7 geöffnet ist, um das erste Wechselspannungsnetz 8 von der ersten Anschlussverbindung 6 und somit von dem ersten Stromrichter 2 abzukoppeln. Für einen reibungslosen Normalbetrieb ist ferner darauf zu achten, dass die Statik der Spannungsregelung durch den ersten Parallelstromrichter 20 geringer ist als die Statik der in das erste Wechselspannungsnetz 8 einspeisenden figürlich nicht dargestellten Generatoren. Ansonsten würde der erste Parallelstromrichter 20 gegen das erste Wechselspannungsnetz 8 arbeiten. Dies ist jedoch unerwünscht.

Die Parallelkurzkupplung 19 und die Kurzkupplung 13 können für beliebige Spannungsbereiche ausgebildet sein. In dem in den Figuren dargestellten Ausführungsbeispielen ist die Kurzkupplung 13 für den Mittelspannungsbereich, also für Spannungen zwischen 1 kV und 52 kV, ausgelegt, wohingegen die Parallelkurzkupplung 21 für den Niederspannungsbereich eingerichtet ist. Auf diese Weise ist ein redundanter Antrieb sowohl größerer 14 als auch kleinerer Lasten oder Motoren 24, 25 ermöglicht. Nur der Vollständigkeit halber sei darauf hingewiesen, dass die Kosten einer für die Niederspannung ausgelegten Parallelkurzkupplung 19 geringer sind als für die Kurzkupplung 13, die für die Mittelspannung ausgelegt ist.

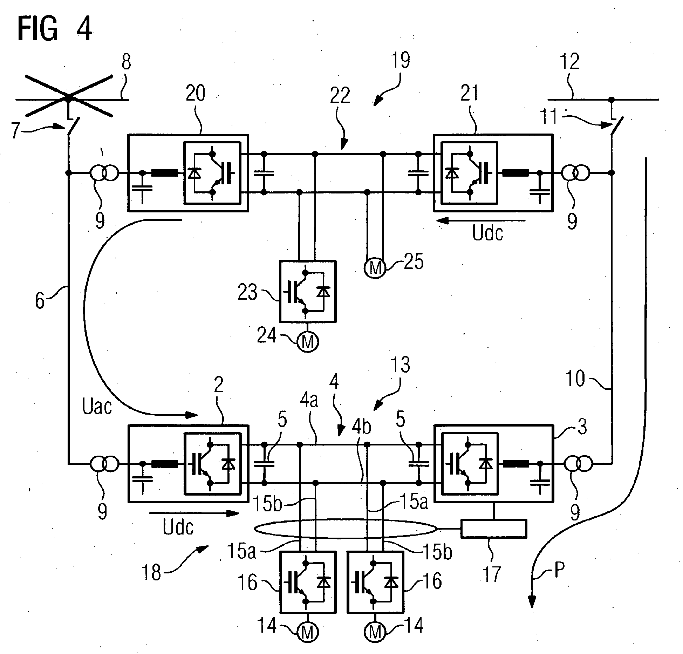

Figur 4 zeigt ein weiteres Ausführungsbeispiel der erfindungsgemäßen Vorrichtung, wobei an dem Parallelstromkreis 22 ein figürlich nicht dargestellter Parallellastanschluss angeschlossen ist, dem ein Parallelantriebswechselrichter 23 zum Antrieb einer Zusatzlast 24 vorgeschaltet ist. Ferner ist ein Gleichspannungsmotor 25 direkt mit dem Parallelgleichspannungszwischenkreis 22 verbunden.

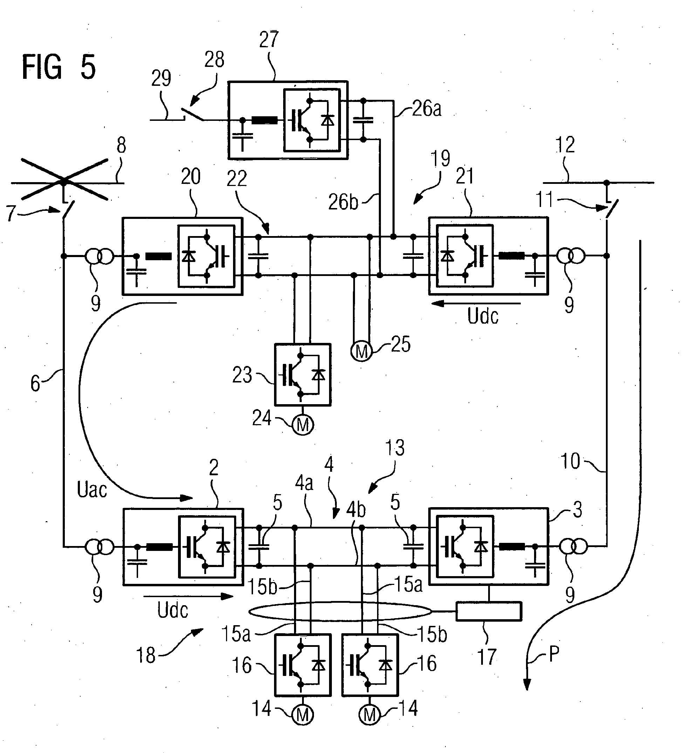

Figur 5 zeigt ein weiteres Ausführungsbeispiel der erfindungsgemäßen Vorrichtung, das weitestgehend dem in Figur 4 gezeigten Ausführungsbeispiel entspricht. In diesem Fall ist jedoch der Parallelgleichspannungszwischenkreis 22 über Gleichspannungsleitungen 26a und 26b gleichspannungsseitig mit einem Notstromrichter 27 verbunden, wobei der Notstromrichter 27 wechselspannungsseitig über einen Notschalter 28 mit einem Wechselspannung führenden Notstromnetz 29 verbunden. Ein weiterer Notstromrichter, der gleichstromseitig mit dem Gleichspannungszwischenkreis 4 und wechselspannungsseitig mit einem weiteren Notstromnetz oder mit demselben Notstromnetz 29 verbunden ist, ist aus Übersichtsgründen figürlich nicht dargestellt. Durch das Notstromnetz 29 beziehungsweise durch die Notstromnetze ist die Ausfallwahrscheinlichkeit der Energieversorgung für die Lasten noch weiter herabgesetzt. Das erste und zweite Wechselspannungsnetz sowie das oder die Notstromnetze können im Rahmen der Erfindung unabhängig voneinander beliebig viele Phasen aufweisen.

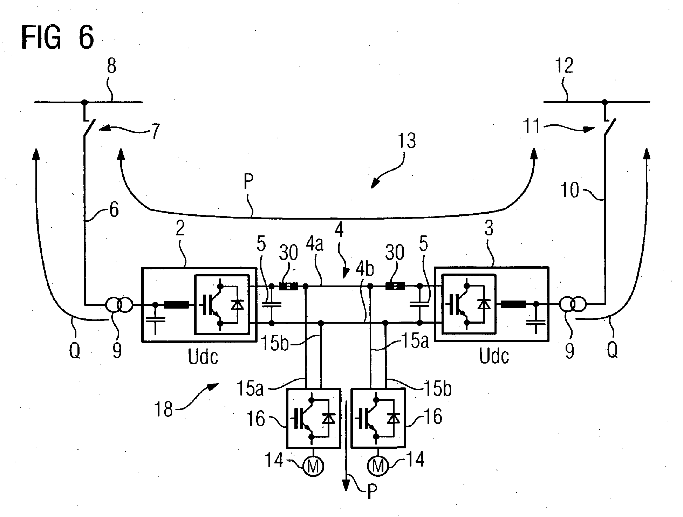

Figur 6 zeigt ein weiteres Ausführungsbeispiel, das im Wesentlichen dem in Figur 2 dargestellten Ausführungsbeispielen entspricht, wobei jedoch der zweite Stromrichter 3 ebenfalls eine Gleichspannungsregelung aufweist, die unabhängig von der Gleichspannungsregelung des ersten Stromrichters 2 ist. Dabei erfolgt die Regelung des ersten Stromrichters 2 und des zweiten Stromrichters 3 auf eine Weise, dass eine gegenseitige Beeinflussung der Stromrichter 2 und 3 beispielsweise durch Schwingungen im Gleichspannungszwischenkreis 4 verhindert sind. Die Stromrichter 2 und 3 sind beispielsweise modular aufgebaut und weisen Leistungsblöcke auf, die auch als Power Electronic Building Blocks bezeichnet werden. Power Electronic Building Blocks sind dem Fachmann als solche bekannt, so dass an dieser Stelle hierauf nicht genauer eingegangen zu werden braucht.

Aus Sicherheitsgründen weist der Gleichspannungszwischenkreis 4 in dem gezeigten Ausführungsbeispiel Unterbrechereinheiten 30 auf, die im Fehlerfall die Unterbrechung des Stromflusses im Gleichspannungszwischenkreis 4 herbeiführen. Bei den Unterbrechereinheiten 30 handelt es sich beispielsweise um Sicherungen, elektrische Schalter oder dergleichen.

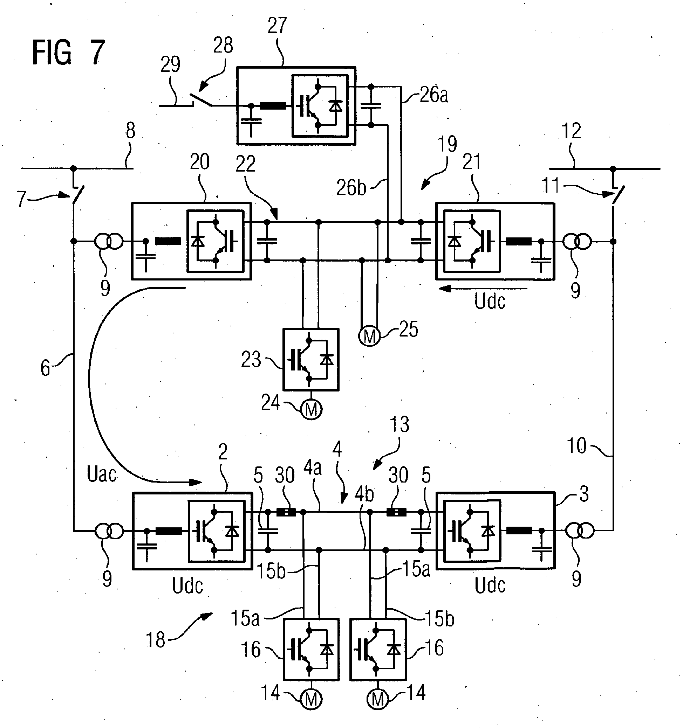

Figur 7 zeigt das Ausführungsbeispiel gemäß Figur 6, wobei jedoch entsprechend. Figur 4 eine zusätzliche antiparallel geschaltete Parallelkurzkupplung 19 zur Stromversorgung kleinerer Lasten 24, 25 vorgesehen ist. Die Regelung der Stromrichter 2, 3 der Kurzkupplung 13 erfolgt wie im Zusammenhang mit dem Ausführungsbeispiel der Figur 6 erläutert. Die Regelung der Parallelkurzkupplung 19 erfolgt wie im Zusammenhang mit dem Ausführungsbeispiel gemäß Figur 4 erläutert, wobei wieder ein mit einem Notstromnetz 29 verbindbarer Notstromrichter 27 für beide Kurzkupplungen 13, 19 vorgesehen ist.

## Patentansprüche

1. Vorrichtung zur redundanten Energieversorgung wenigstens einer Last (14) mit einem abschaltbare Leistungshalbleiter aufweisenden ersten Stromrichter (2), der über einen ersten Anschluss (7) mit einem ersten Wechselspannungsnetz (8) verbindbar ist, einem abschaltbare Leistungshalbleiter aufweisenden zweiten Stromrichter (3), der über einen zweiten Anschluss (11) mit einem zweiten Wechselspannungsnetz (12) verbindbar ist, und einem Gleichspannungszwischenkreis (4), der den ersten Stromrichter (2) gleichspannungsseitig mit dem zweiten Stromrichter (3) verbindet, so dass durch eine zweckmäßige Regelung der Stromrichter (2, 3) eine beliebige Leistungsübertragung von dem ersten Wechselspannungsnetz (8) zum zweiten Wechselspannungsnetz (12) oder von dem zweiten Wechselspannungsnetz (12) in das erste Wechselspannungsnetz 8 ermöglicht ist, wobei
der Gleichspannungszwischenkreis (4) wenigstens einen Lastanschluss zur Energieversorgung einer Last (10) aufweist.

2. Vorrichtung nach Anspruch 1,
**dadurch gekennzeichnet, dass** der erste Stromrichter (2) eine erste Gleichspannungsregelung zur Regelung einer Gleichspannung des Gleichspannungszwischenkreises (4) aufweist.

3. Vorrichtung nach Anspruch 1 oder 2,
**dadurch gekennzeichnet, dass** der zweite Stromrichter (3) eine Leistungsregelung zur Regelung des Leistungsflusses über den zweiten Stromrichter (3) aufweist, wobei die Leistungsregelung auf eine negative Sollgleichleistung erfolgt, deren Betrag dem Betrag der von allen Lasten aufgenommenen Leistung entspricht.

4. Vorrichtung nach Anspruch 1 oder 2,
**dadurch gekennzeichnet, dass** der zweite Stromrichter (3) eine zweite Spannungsregelung zur Regelung der Spannung im Gleichspannungszwischenkreis (4) aufweist.

5. Vorrichtung nach Anspruch 4, **gekennzeichnet durch**
in dem Gleichspannungszwischenkreis (4) angeordnete Gleichstromunterbrecher (30).

6. Vorrichtung nach einem der vorhergehenden Ansprüche,
**dadurch gekennzeichnet, dass** jeder Stromrichter (23) aus in Reihe geschalteten Leistungsblöcken zusammengesetzt ist.

7. Vorrichtung nach Anspruch 5,
**dadurch gekennzeichnet, dass** jeder Leistungsblock über eine Unterbrechungseinheit mit dem Gleichspannungszwischenkreis (4) verbunden ist.

8. Vorrichtung nach einem der vorhergehenden Ansprüche,
**dadurch gekennzeichnet, dass** jeder Lastanschluss über einen Wechselrichterantrieb (16) mit dem Gleichspannungszwischenkreis (4) verbunden ist.

9. Vorrichtung nach einem der vorhergehenden Ansprüche, **gekennzeichnet durch**
einen ersten Parallelstromrichter (20), der über einen ersten Anschlusszweig (6) mit dem ersten Anschluss (7) und dem ersten Stromrichter (2) verbunden ist, und einem zweiten Parallelstromrichter (21), der über einen zweiten Anschlusszweig mit dem zweiten Anschluss (11) und dem zweiten Stromrichter (3) verbunden ist, wobei der erste Parallelstromrichter (20) und der zweite Parallelstromrichter (21) über einen Parallelgleichspannungszwischenkreis (22) miteinander verbunden sind.

10. Vorrichtung nach Anspruch 8,
**dadurch gekennzeichnet, dass** der zweite Parallelstromrichter (21) eine Parallelgleichspannungsregelung zur Regelung der Gleichspannung des Parallelgleichspannungszwischenkreises (22) aufweist.

11. Vorrichtung nach Anspruch 9 oder 10,
**dadurch gekennzeichnet, dass** der erste Parallelstromrichter (21) eine Wechselspannungsregelung zur Regelung einer Wechselspannung in dem ersten Anschlusszweig aufweist.

12. Vorrichtung nach einem der Ansprüche 9 bis 11,
**dadurch gekennzeichnet, dass** der Parallelgleichspannungszwischenkreis (22) wenigstens einen Parallellastanschluss zum Anschluss einer Zusatzlast (24,25) aufweist.

13. Vorrichtung nach einem der vorhergehenden Ansprüche,
**dadurch gekennzeichnet, dass** der erste Anschluss und/der zweite Anschluss Unterbrechungseinheiten (7,8) sind.

14. Vorrichtung nach einem der vorhergehenden Ansprüche,
**dadurch gekennzeichnet, dass** der erste Stromrichter (2) und der erste Parallelstromrichter (20) über einen ersten Transformator (9) mit dem ersten Anschlusszweig und der zweite Stromrichter (3) und/oder der zweite Parallelstromrichter (21) über einen zweiten Transformator (9) mit dem zweiten Anschlusszweig (16) verbunden sind.

15. Vorrichtung nach einem der Ansprüche 9 bis 14,
**dadurch gekennzeichnet, dass** der Gleichspannungszwischenkreis (4) mittels eines Notströmrichters mit einem Wechselspannung führenden Notstromnetz verbindbar ist.

16. System mit einem ersten Wechselspannungsnetz (8) und einem zweiten Wechselspannungsnetz (12) sowie mit einer Vorrichtung gemäß einem der vorhergehenden Ansprüche.

## Claims

1. Apparatus for the redundant power supply of at least one load (14) having a first converter (2), which comprises power semiconductors which can be switched off and which can be connected to a first AC voltage system (8) via a first connection (7), a second converter (3), which comprises power semiconductors which can be switched off and which can be connected to a second AC voltage system (12) via a second connection (11), and a DC voltage intermediate circuit (4), which connects the first converter (2) to the second converter (3) on the DC voltage side, such that expediently regulating the converters (2, 3) allows for any desired power transfer from the first AC voltage system (8) to the second AC voltage system (12) or from the second AC voltage system (12) to the first AC voltage system (8), wherein the DC voltage intermediate circuit (4) has at least one load connection for the purpose of supplying power to a load (10).

2. Apparatus according to Claim 1,
**characterized in that**
the first converter (2) has first DC voltage regulation for the purpose of regulating a DC voltage of the DC voltage intermediate circuit (4).

3. Apparatus according to Claim 1 or 2,
**characterized in that**
the second converter (3) has power regulation for the purpose of regulating the power flow via the second converter (3), the power being regulated to a negative desired DC power, whose absolute value corresponds to the absolute value of the power consumed by all of the loads.

4. Apparatus according to Claim 1 or 2,
**characterized in that**
the second converter (3) has second voltage regulation for the purpose of regulating the voltage in the DC voltage intermediate circuit (4).

5. Apparatus according to Claim 4,
**characterized by**
DC interrupters (30) arranged in the DC voltage intermediate circuit (4).

6. Apparatus according to one of the preceding claims,
**characterized in that**
each converter (23) comprises power blocks connected in series.

7. Apparatus according to Claim 5,
**characterized in that**
each power block is connected to the DC voltage intermediate circuit (4) via an interrupting unit.

8. Apparatus according to one of the preceding claims,
**characterized in that**
each load connection is connected to the DC voltage intermediate circuit (4) via an inverter drive (16).

9. Apparatus according to one of the preceding claims,
**characterized by**
a first parallel converter (20), which is connected to the first connection (7) and the first converter (2) via a first connection branch (6), and a second parallel converter (21), which is connected to the second connection (11) and the second converter (3) via a second connection branch, the first parallel converter (20) and the second parallel converter (21) being connected to one another via a parallel DC voltage intermediate circuit (22).

10. Apparatus according to Claim 8,
**characterized in that**
the second parallel converter (21) has parallel DC voltage regulation for the purpose of regulating the DC voltage of the parallel DC voltage intermediate circuit (22).

11. Apparatus according to Claim 9 or 10,
**characterized in that**
the first parallel converter (21) has AC voltage regulation for the purpose of regulating an AC voltage in the first connection branch.

12. Apparatus according to one of Claims 9 to 11,
**characterized in that**
the parallel DC voltage intermediate circuit (22) has at least one parallel load connection for connecting an additional load (24, 25).

13. Apparatus according to one of the preceding claims,
**characterized in that**
the first connection and/or the second connection are interrupting units (7, 8).

14. Apparatus according to one of the preceding claims,
**characterized in that**
the first converter (2) and the first parallel converter (20) are connected to the first connection branch and the second converter (3) via a first transformer (9) and/or the second parallel converter (21) is connected to the second connection branch (16) via a second transformer (9).

15. Apparatus according to one of Claims 9 to 14,
**characterized in that**
the DC voltage intermediate circuit (4) can be connected to an AC voltage-carrying emergency power supply system by means of an emergency converter.

16. System having a first AC voltage system (8) and a second AC voltage system (12) and having an apparatus according to one of the preceding claims.

## Revendications

1. Disposition d'alimentation redondante en énergie d'au moins une charge (14) comprenant un premier convertisseur (2) à semi-conducteur pouvant être bloqué, qui peut être relié par une première borne (7) à un premier réseau (8) de tension alternative, un deuxième convertisseur (3) à semi-conducteur pouvant être bloqué, qui peut être relié par une deuxième borne (11) à un deuxième réseau (12) de tension alternative, et un circuit (4) intermédiaire de tension continue qui relie le premier convertisseur (2) du côté de la tension continue au deuxième convertisseur (3) de manière à rendre possible, par une régulation adéquate des convertisseurs (2, 3) n'importe quelle transmission de puissance du premier réseau (8) de tension alternative au deuxième réseau (12) de tension alternative ou du deuxième réseau (12) de tension alternative au premier réseau (8) de tensions alternative, le circuit (4) intermédiaire de tension continue ayant au moins une borne de charge pour l'alimentation en énergie d'une charge (10).

2. Dispositif suivant la revendication 1,
**caractérisé en ce que**
le premier convertisseur (2) a une première régulation de tension continue pour la régulation d'une tension continue du circuit (4) intermédiaire de tension continue.

3. Dispositif suivant la revendication 1 ou 2,
**caractérisé en ce que**
le deuxième convertisseur (3) a une régulation de puissance pour la régulation du flux de puissance passant par le deuxième convertisseur (3), la régulation de puissance s'effectuant sur une puissance continue de consigne négative dont la valeur absolue correspond à la valeur absolue de la puissance absorbée par toutes les charges.

4. Dispositif suivant la revendication 1 ou 2,
**caractérisé en ce que**
le deuxième convertisseur (3) a une deuxième régulation de tension pour la régulation de la tension dans le circuit (4) intermédiaire de tension continue.

5. Dispositif suivant la revendication 4,
**caractérisé**
**par** un interrupteur (30) de tension continue monté dans le circuit (4) intermédiaire de tension continue.

6. Dispositif suivant l'une des revendications précédentes,
**caractérisé en ce que** chaque convertisseur (23) est composé de blocs de puissance montés en série.

7. Dispositif suivant la revendication 5,
**caractérisé**
**en ce que** chaque bloc de puissance est relié au circuit (4) intermédiaire de tension continue par une unité d'interruption.

8. Dispositif suivant l'une des revendications précédentes,
**caractérisé**
**en ce que** chaque borne de charge est reliée au circuit (4) intermédiaire de tension continue par un entraînement (16) d'onduleur.

9. Dispositif suivant l'une des revendications précédentes,
**caractérisé**
**par** un premier convertisseur (20) en parallèle qui est relié à la première borne (7) et au premier convertisseur (2) par une première branche (6) de connexion, et un deuxième convertisseur (21) en parallèle qui est relié à la deuxième borne (11) et au deuxième convertisseur (3) par une deuxième branche de connexion, le premier convertisseur (20) en parallèle et le deuxième convertisseur (21) en parallèle étant reliés l'un à l'autre par un circuit (22) intermédiaire de tension continue en parallèle.

10. Dispositif suivant la revendication 8,
**caractérisé**
**en ce que** le deuxième convertisseur (21) en parallèle a une régulation de tension continue en parallèle pour la régulation de la tension continue du circuit (22) intermédiaire de tension continue en parallèle.

11. Dispositif suivant la revendication 9 ou 10,
**caractérisé**
**en ce que** le premier convertisseur (21) en parallèle a une régulation de tension alternative pour la régulation d'une tension alternative dans la première branche de connexion.

12. Dispositif suivant l'une des revendications 9 à 11,
**caractérisé**
**en ce que** le circuit (22) intermédiaire de tension continue en parallèle a au moins une connexion de charge en parallèle pour la connexion d'une charge (24, 25) supplémentaire.

13. Dispositif suivant l'une des revendications précédentes,
**caractérisé**
**en ce que** la première connexion et/ou la deuxième connexion sont des unités (7, 8) d'interruption.

14. Dispositif suivant l'une des revendications précédentes,
**caractérisé**
**en ce que** le premier convertisseur (2) et le premier convertisseur (20) en parallèle sont reliés par un premier transformateur (9) à la première branche de connexion et le deuxième convertisseur (3) et/ou le deuxième convertisseur (21) en parallèle par un deuxième transformateur (9) à la deuxième branche (16) de connexion.

15. Dispositif suivant l'une des revendications 9 à 14,
**caractérisé**
**en ce que** le circuit (4) intermédiaire de tension continue peut être relié au moyen d'un convertisseur d'urgence à un réseau de courant d'urgence pour une tension alternative.

16. Système ayant un premier réseau (8) de tension alternative et un deuxième réseau (12) de tension alternative ainsi qu'un dispositif suivant l'une des revendications précédentes.
